# FASCICULE DE BREVET EUROPEEN

(11) **EP 3 614 823 B1**
(45) Date de publication et mention de la délivrance du brevet: **09.06.2021**
(21) Numéro de dépôt: 18729726.2
(22) Date de dépôt: 23.04.2018
(51) Int. Cl.: A01D 17/06

(54) **DISPOSITIF DE NETTOYAGE DE LEGUMES RACINES ET MACHINE AGRICOLE EQUIPEE D'UN TEL DISPOSITIF**
VORRICHTUNG ZUM REINIGEN VON WURTZEL GEMÜSE UND LANDWIRTSCHAFTLICHE MASCHINE MIT EINER SOLLCHEN VORRICHTUNG
DEVICE FOR CLEANING ROOT VEGETABLES AND AGRICULTURAL MACHINE WITH SUCH A DEVICE

(30) Priorité: 28.04.2017 FR 1753736
(43) Date de publication de la demande: 04.03.2020
(73) Titulaire: Alexandre, Eric, 63720 Clerlande (FR)
(72) Inventeur: Alexandre, Eric, 63720 Clerlande (FR)
(74) Mandataire: Dennemeyer & Associates S.A.
(86) Numéro de dépôt international: PCT/FR2018/000096
(87) Numéro de publication internationale: WO 2018/197761

(56) Documents cités:
- FR-A1- 2 664 796
- US-A1- 2009 104 953

## Description

La présente invention concerne un dispositif de nettoyage de légumes racines ainsi qu'une machine agricole équipée d'un tel dispositif.

Par légumes racines, on désigne des végétaux dont la partie utile, employée soit pour l'alimentation humaine ou animale soit pour un usage industriel, cosmétique, chimique, pharmaceutique ou autre, se trouve naturellement dans le sol. A titre d'exemples non limitatifs, on peut citer les betteraves fourragères, sucrières ou rouges, les carottes, les pommes de terre, les patates douces, les ignames, le manioc, les arachides, les oignons ou tout autre légume dont la partie comestible est souterraine et induit l'arrachage du légume. Par la suite, pour plus de lisibilité, l'invention sera décrite en référence à la récolte de betteraves.

Lors de la récolte des légumes racines, il convient de les débarrasser autant que possible de la terre qui les recouvre. Cette terre, notamment en période pluvieuse, adhère aux légumes d'autant plus aisément que ces derniers ont des radicelles et/ou des replis favorisant la rétention de la terre humide, donc collante, sur le légume. Du fait que ces légumes doivent, d'une part, être le plus propre possible avant toute transformation et que, d'autre part, les légumes sont généralement payés au poids dit propre, il est important pour le producteur de se débarrasser au plus tôt du maximum de terre.

Pour cela, divers dispositifs existent, généralement associés aux machines de récolte. Des tapis grillagés, vibrants et/ou avec des chicanes induisant un parcours à obstacle ou des griffes sont ainsi disposés entre la barre de récolte qui déterre les légumes et la zone de réception des légumes racines sur la machine de récolte.

Un autre dispositif employé comprend plusieurs rouleaux contrarotatifs pourvus de reliefs disposés en spirale sur leurs pourtours. La rotation de ces rouleaux assure le transfert des légumes tout en les secouant, ce qui favorise l'enlèvement de la terre qui tombe au sol, entre les rouleaux. US-A-2009/0104 953 décrit de tels rouleaux. D'autres dispositifs sont basés sur une variante de tels rouleaux pourvus d'une vis d'Archimède, tels que décrits par FR-A-3 028 712 ou US-A-3 771 651. Si ces dispositifs donnent pleinement satisfaction lorsque la terre est sèche ou du moins peu humide, il s'avère que lorsque la terre est collante et lourde, elle s'accumule entre les spires des reliefs sur chaque rouleau et entre les rouleaux. Il s'ensuit alors une accumulation de terre tant sur les rouleaux qu'entre ces derniers qui peut induire jusqu'au blocage en rotation des rouleaux. Un tel blocage peut aller jusqu'à la casse d'une pièce d'entrainement en rotation, par exemple une courroie, voir la casse d'un ou de plusieurs rouleaux. De plus, même si les rouleaux tournent, alors que les espaces entre les spires des reliefs sont colmatés, les reliefs n'assurent plus le grattage des légumes, la terre restant sur les légumes. Ce phénomène de terre collante est particulièrement observé avec des terres sédimentaires et/ou argileuses rencontrées dans certaines zones agricoles dites à terres riches.

C'est à ces inconvénients qu'entend plus particulièrement remédier l'invention en proposant un dispositif de nettoyage de légumes racines lors de leurs récoltes, utilisable en toutes circonstances, que la terre soit lourde et collante ou non.

A cet effet, l'invention a pour objet un dispositif de nettoyage de légumes racines comprenant au moins deux rouleaux montés rotatifs autour d'un axe, caractérisé en ce qu'au moins un des rouleaux est équipé d'un moyen de chauffage de sa paroi externe.

Ainsi, la paroi externe du rouleau étant chauffée, cela a pour effet de sécher la terre qui est éventuellement collée sur le rouleau, au moins sur une épaisseur de quelques millimètres. Ce séchage est suffisant pour rendre la terre craquante et s'affranchir du phénomène de ventouse de la terre humide sur le rouleau et sur les reliefs du rouleau. Les vibrations dues au déplacement des légumes sur les rouleaux assurent le décollement de la terre ainsi séchée et induisent sa chute au sol. En d'autres termes, on maintient en toutes circonstances au moins un, et de préférence tous les rouleaux, si ce n'est propre au moins couvert avec un minimum de terre, de sorte à assurer le transfert et le nettoyage des légumes en toutes circonstances, sans colmatage de l'espace entre les rouleaux.

Selon des aspects avantageux mais non obligatoires de l'invention, un tel dispositif peut comprendre une ou plusieurs des caractéristiques suivantes:
- l'axe de rotation des rouleaux est perpendiculaire au sens de déplacement des légumes racines sur les rouleaux.
- L'axe de rotation d'au moins certains des rouleaux est parallèle au sens de déplacement des légumes racines sur les rouleaux.
- Les axes de rotation d'au moins deux rouleaux voisins sont parallèles.
- Les axes de rotation d'au moins deux rouleaux voisins ne sont pas parallèles.
- Les rouleaux voisins dont les axes de rotation ne sont pas parallèles sont coniques, avec un écartement constant entre les rouleaux, selon la longueur des rouleaux.
- Le moyen de chauffage comprend un organe de chauffage d'un fluide caloporteur circulant en circuit fermé dans le volume interne d'au moins un rouleau, entre ses extrémités.
- Tous les rouleaux reçoivent un fluide caloporteur circulant dans leurs volumes intérieurs, entre les extrémités des rouleaux.
- Le dispositif de nettoyage comprend, outre les rouleaux, au moins un tapis roulant et des griffes rotatives, au moins un de ces éléments est également pourvu d'un moyen de chauffage.
- Le moyen de chauffage comprend, comme organe de chauffage, au moins une résistance électrique équipant un des éléments constitutifs du dispositif de nettoyage.
- Le moyen de chauffage comprend, comme organe de chauffage, la circulation d'air chaud sur au moins un des éléments constitutifs du dispositif de nettoyage.
- Le moyen de chauffage des éléments constitutifs du dispositif de nettoyage comprend au moins deux organes de chauffage choisis parmi une circulation de fluide caloporteur, une circulation d'air chaud, une résistance électrique.
- Au moins un rouleau est équipé sur sa face externe d'au moins une nervure creuse adaptée pour recevoir un organe de chauffage choisi parmi une circulation de fluide caloporteur, une circulation d'air chaud, une résistance électrique.

- L'invention concerne également une machine agricole de récolte de légumes racines équipée d'un dispositif de nettoyage des légumes racines conforme à une des caractéristiques précédentes.

L'invention sera mieux comprise et d'autres avantages de celle-ci apparaitront plus clairement à la lecture de la description qui va suivre de plusieurs modes de réalisation de l'invention, donnée à titre d'exemple non limitatif et faite en référence aux dessins suivants dans lesquels:
- La figure 1 est une vue en perspective, schématique et simplifiée, d'une machine agricole de récolte de légumes racines équipée d'un dispositif de nettoyage conforme à un mode de réalisation de l'invention,
- la figure 2 est une vue de dessus illustrant les moyens de récolte et de transport des légumes racines dans la machine agricole de la figure 1, avec un dispositif de nettoyage conforme à un mode de réalisation de l'invention,
- la figure 3 est une vue partielle, en perspective et à plus grande échelle, du dispositif de nettoyage illustré à la figure 2,
- la figure 4 est une vue partielle, en perspective et à une autre échelle, d'une autre partie du dispositif de nettoyage et
- la figure 5 est une vue en perspective, à une autre échelle, d'un rouleau constitutif d'un dispositif de nettoyage conforme à l'invention.

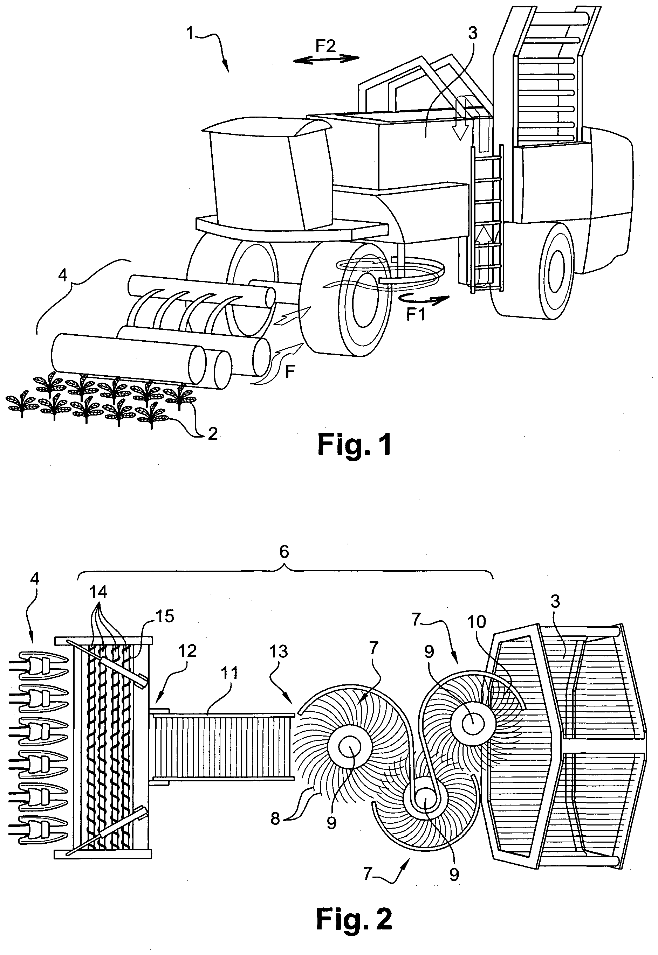

La figure 1 illustre, de manière schématique, une machine agricole 1 destinée à la récolte de légumes racines, par exemple des betteraves 2. Par la suite, il sera fait référence, de manière non limitative, à la récolte des betteraves, étant entendu que l'invention s'applique à la récolte de tous les types de légumes racines pour autant que leur nettoyage soit nécessaire avant toute utilisation, transformation et/ou consommation par des animaux et/ou des êtres humains. Ainsi, une telle machine concerne également la récolte de pommes de terre ou d'autres légumes racines.

Dans tous les cas, la récolte des légumes racines comprend, en général, une opération de coupe de la partie aérienne ou des feuilles des légumes puis un arrachage hors du sol des légumes, cela avant de les transporter vers une trémie ou benne de stockage temporaire 3 située, ici sur la machine agricole 1. Lors de leurs transports, les légumes, en l'espèce les betteraves 2, nécessitent d'être débarrassés autant que possible de la terre qui reste collée sur les légumes. En effet, le paiement de la récolte se base, majoritairement, sur le poids de légumes « propres », donc sans terre, et prêts à être utilisés ou transformés. De plus, la présence de terre sur les légumes, en l'espèce sur les betteraves, altère la durée et la qualité de la conservation avant transformation ou utilisation.

Ici, l'organe, connu en soi, qui assure la coupe de la partie aérienne des betteraves 2 et leur arrachage est schématiquement illustré à la figure 1 par des tubes référencés 4.

Une fois les betteraves 2, ou plus généralement les légumes racines, arrachées, elles sont dirigées, selon la flèche F, vers un dispositif de nettoyage. Ce dispositif de nettoyage assure, selon un mode de réalisation préféré, également le transport des betteraves 2 en direction de la benne de stockage 3, selon la flèche F1 à la figure 1. Dans d'autres modes de réalisation non illustrés, le dispositif de nettoyage n'assure que la fonction de nettoyage, le transport des légumes s'effectuant, par exemple, par gravité.

Le dispositif de nettoyage et de transport, référencé 6, est particulièrement visible à la figure 2. Comme cela ressort de la représentation schématique de la figure 2, le dispositif de nettoyage et de transport 6 est formé de plusieurs éléments. En partant de la droite de la figure 2, donc à partir de la benne de stockage 3, le dispositif 6 comprend une série 7 de griffes 8. Les griffes 8 sont courbées. Elles sont fixées, par une extrémité, sur un arbre central vertical 9 autour duquel elles sont rotatives. Les griffes 8 sont disposées en hélice sur l'arbre 9. Dans l'exemple, trois arbres 9 équipés de séries 7 griffes 8 sont prévus. Les griffes 8 de chaque série 7 sont disposées de sorte à assurer le déplacement des betteraves depuis les griffes 8 portées par l'arbre 9 le plus éloigné de la benne de stockage 3 jusqu'aux griffes 8 dont les extrémités libres 10 sont positionnées au-dessus de la benne de stockage 3, comme cela ressort de la figure 2.

Les griffes 8 situées en partie inférieure, donc à l'altitude la plus basse par rapport à la benne de stockage 3, sont positionnées dans le prolongement d'un tapis roulant 11. Ce tapis 11 est ajouré. Avantageusement il est formé de barrettes ou d'un maillage métallique. L'extrémité 12 du tapis 11 opposée à l'extrémité 13 en regard des griffes 8, est située dans le prolongement de rouleaux 14. Les rouleaux 14 sont cylindriques à base circulaire.

Comme cela apparait à la figure 2, les rouleaux 14 sont positionnés en arrière de l'organe de coupe et d'arrachage 4. En d'autres-termes, les betteraves 2, une fois arrachées, se trouvent sur les rouleaux 14. Les rouleaux 14, de par leur position en amont du trajet des betteraves en direction de la benne 3, forment le principal élément de nettoyage du dispositif de nettoyage et de transport 6. Ici, les rouleaux 14 sont au nombre de quatre. En variante, leur nombre est différent, étant entendu que le minimum de rouleaux 14 est de deux. Dans d'autres modes de réalisation non représentés, des rouleaux de nettoyages sont également positionnés dans le prolongement de l'extrémité 13 du tapis 11, soit avant les séries 7 de griffes 8 soit en remplacement de ces dernières. De tels rouleaux sont alors orientés avec leurs axes longitudinaux parallèles au sens de déplacement de la machine agricole 1.

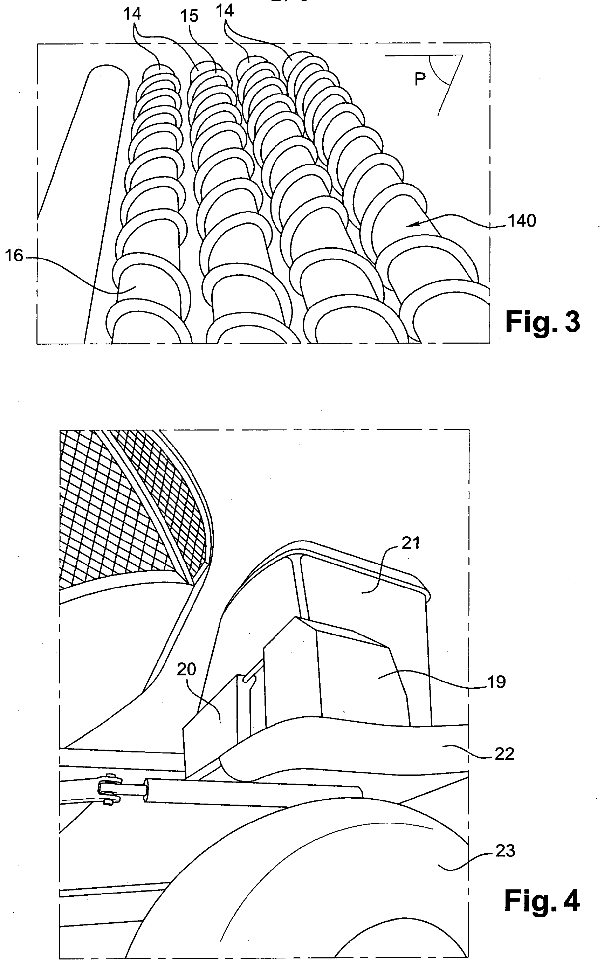

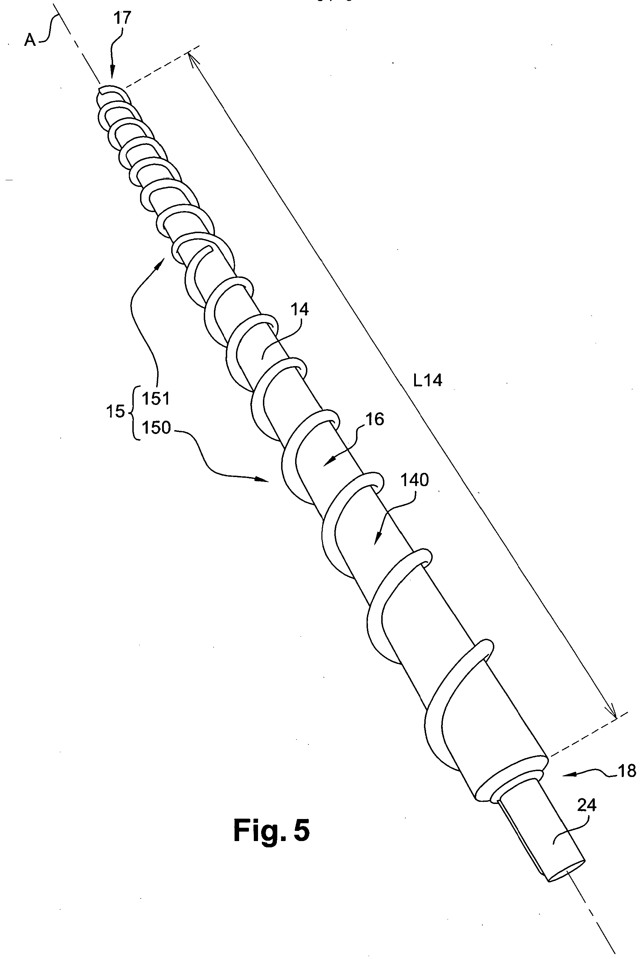

Les rouleaux 14 sont, dans le mode de réalisation avantageux illustré, équipés chacun d'au moins une nervure hélicoïdale 15 sur leur circonférence. En variante, la circonférence des rouleaux est pourvue d'autres organes en reliefs, par exemple des spires, des reliefs en étoile, des nervures parallèles ou autres. La nervure 15, particulièrement visible aux figures 3 et 5, s'étend perpendiculairement à partir de la face externe 140 de la paroi 16 constitutive du rouleau 14 vers l'extérieur, cela sur toute la longueur utile L14 de chaque rouleau 14. Les rouleaux 14 sont parallèles entre eux et coplanaires dans un plan horizontal P, sensiblement parallèle au sol. Les rouleaux 14 sont orientés de sorte que leur axes longitudinaux A sont perpendiculaires au sens de déplacement F des légumes racines sur les rouleaux 14, donc, dans l'exemple, perpendiculaire au sens de déplacement de la machine agricole 1, illustré par la double flèche F2 à la figure 1. En variante, au moins certains des rouleaux ont leurs axes de rotation parallèles au sens de déplacement des légumes racines sur les rouleaux.

Dans d'autres modes de réalisation non illustrés, les rouleaux sont disposés angulairement. Dans ce cas, ces rouleaux sont, avantageusement, coniques afin de préserver un écartement constant entre les rouleaux.

Comme cela ressort de la figure 2, une seule nervure hélicoïdale 15 équipe chaque rouleau 14. En variante, il y a plusieurs nervures 15 sur chaque rouleau 14.

La nervure 15 est, selon un mode réalisation avantageux mais non limitatif illustré à la figure 5, divisée en deux parties 150, 151. Les parties 150, 151 sont égales et occupe sensiblement chacune une moitié de la longueur utile L14 du rouleau 14. Chaque partie 150, 151 a un pas d'hélice orientée en sens inverse de l'autre partie 151, 150, comme cela ressort particulièrement des figures 3 et 5. Ainsi, chaque rouleau 14 est équipé d'une nervure 15 assurant une rotation en sens inverse de la betterave 2 lorsque cette dernière est entraînée par la rotation du rouleau 14, cela entre les extrémités 17, 18 du rouleau 14. On réalise ainsi, sur un même rouleau 14, une contre-rotation selon la partie 150, 151 de la nervure 15 sur laquelle se trouve la betterave 2. Cette contre-rotation a pour effet de générer des vibrations telles que le déplacement des betteraves 2 sur les rouleaux 14 s'effectue par saut sur les rouleaux 14, les légumes racines ayant par ailleurs tendance à rouler sur eux-mêmes lors du déplacement. Ces mouvements de vibration et ces chocs permettent de se débarrasser de la terre présente sur les betteraves 2, pour autant que la terre ne soit pas trop collante, donc humide. On assure ainsi, de par la configuration du dispositif 6 et donc de ses éléments constitutifs 7 ; 11 et 14, une action de grattage des légumes racines en vue de les débarrasser de la terre qui les couvre.

Une telle action est connue mais s'avère insuffisante pour obtenir un nettoyage efficace des légumes racines lorsque la terre est grasse et collante, comme cela se rencontre dans certaines zones agricoles comme rencontrées, par exemple, en France, en Europe de l'est, dans les plaines nord-américaines ou sud-américaines ou en Chine.

Ainsi, compte tenu de la distance séparant deux rouleaux 14 voisins et de la présence des nervures 15, qui agissent comme des chicanes, il arrive que la terre s'accumule non seulement sur le rouleau autour de la nervure 15 mais également entre deux rouleaux 14 voisins. Lorsque la terre est grasse et humide, l'accumulation de terre est importante et peut entrainer un disfonctionnement du dispositif de nettoyage. En particulier, les nervures 15 ne remplissent plus leur rôle de chicane, le rouleau 14 se comportant alors comme un rouleau lisse. La terre accumulée s'insère également entre les rouleaux 14 et peut limiter, voire stopper, la rotation de ces derniers.

Compte tenu des dimensions des rouleaux 14, en général compris entre 2 m et 5 m de long pour un diamètre externe variant de 0,10 m à 0,15 m, avec un espace inter-rouleaux compris entre 0,04 m et 0,10 m, il est relativement fréquent d'observer des blocages en rotation des rouleaux 14 lors de l'accumulation de terre. Ces blocages sont tels que, si le moteur d'entrainement n'est pas immédiatement stoppé, la résistance à la rotation peut entraîner la casse d'une courroie d'entrainement et/ou d'au moins un rouleau 14. Ceci est d'autant plus fréquent que, pour limiter le poids des rouleaux et donc la puissance nécessaire pour les entrainer en rotation, les rouleaux 14 sont creux sur toute leur longueur utile L14, avec une épaisseur de paroi 16 comprise entre 0,4 mm et 1 mm.

Pour remédier à cela, l'invention permet, si ce n'est d'éviter totalement au moins de limiter, le blocage en rotation des rouleaux 14 en diminuant l'adhérence de la terre sur les rouleaux 14. Pour cela, au moins un, avantageusement tous les rouleaux 14 sont équipés d'un moyen de chauffage de leur paroi 16, cela sur toute la longueur utile L14 du rouleau 14.

Ce moyen de chauffage comprend, dans un mode de réalisation préféré, un organe de chauffage assurant la circulation d'un fluide caloporteur entre les extrémités 17 et 18 d'au moins un et avantageusement de chaque rouleau 14. Ici, le fluide caloporteur est un liquide, par exemple de l'eau, un liquide à base d'éthylène glycol ou de propylène, de l'huile ou un liquide de refroidissement. En variante, il s'agit d'un gaz ou d'un autre liquide.

La circulation du liquide caloporteur entre les extrémités 17, 18 s'effectue à un débit et donc avec un temps de séjour dans le rouleau 14, adapté pour amener la température de la face externe 140 de la paroi 16 d'au moins 50°C et, de préférence, à une température comprise entre 75°C et 95°C, avantageusement voisine de 85°C.

Pour permettre le passage du liquide caloporteur dans le volume interne de chaque rouleau 14, deux rampes d'alimentation, avec autant de raccords, de préférence rotatifs, que nécessaire sont disposées aux extrémités 17, 18 des rouleaux 14. Ces rampes, non illustrées et connues en soi, sont avantageusement fixées au châssis de la machine agricole 1. Les rampes d'alimentation sont raccordées aux extrémités 17, 18 des rouleaux 14.

Comme cela ressort de la figure 5, les extrémités 17 et 18 d'un rouleau 14 sont chacune pourvue d'un manchon d'arbre d'entrainement 24 permettant la rotation du rouleau. Le manchon 24 dont le diamètre est inférieur au diamètre du rouleau, pénètre de quelques centimètres dans le volume interne du rouleau. Un perçage central du manchon 24 permet d'introduire le fluide caloporteur dans le volume interne du rouleau 14.

La circulation du fluide caloporteur, en circuit fermé, dans les rouleaux entre les rampes d'alimentation situées aux extrémités 17, 18 des rouleaux 14 s'effectue selon un sens défini par le constructeur ou par l'installateur du moyen de chauffage. On conçoit que la circulation peut être simple, l'entrée du fluide s'effectuant par une extrémité et la sortie par l'autre ou bien complexe : Au moins un serpentin est prévu dans le rouleau, l'entrée et la sortie du ou des serpentin(s) s'effectuant alors par les deux extrémités ou par une seule. La mise en circulation du liquide est réalisée par un organe de chauffage et de circulation 19, illustré schématiquement à la figure 4.

Cet organe 19 est relié à un réservoir 20 de fluide caloporteur dont le volume est adapté au nombre et aux dimensions des rouleaux 14 à alimenter. Il s'agit, par exemple, d'un organe 19 utilisé pour le chauffage additionnel d'un véhicule, typiquement un camping-car, un camion ou une caravane. Il comporte une chaudière, soit électrique soit, de préférence, thermique et alimentée par un combustible provenant soit d'un réservoir propre soit du réservoir du véhicule. A titre d'exemple, on connait des organes de chauffage 19, tels ceux commercialisés par la société WEBASTO, permettant de générer le chauffage d'un liquide caloporteur à environ 85°C, avec un débit de 1500 L/H à 5800L/H et pour une puissance consommée de 60 W à 140 W, selon les modèles.

L'organe 19 est, dans le mode de réalisation illustré à la figure 4, installé derrière le siège 21 du conducteur de la machine agricole 1, sur un garde boue 22 d'une roue 23. Cette position en hauteur par rapport aux rouleaux 14 et aux rampes de distribution et à proximité de ces éléments facilite l'alimentation par gravité en liquide caloporteur des rouleaux 14 tout en limitant les déperditions de chaleur lors de la circulation du liquide caloporteur entre l'organe 19 et les rouleaux 14.

On conçoit que, en variante, la disposition de l'organe 19 sur la machine agricole 1 est différente. Dans un autre mode de réalisation, on utilise plusieurs organes de chauffage 19, éventuellement de nature et/ou de puissances différentes. Ainsi, une résistance électrique peut être associée à la chaudière de l'organe 19, raccourcissant ainsi le temps de chauffage du liquide caloporteur. De plus, un dispositif de filtration du fluide caloporteur peut, en variante, équipé l'organe de chauffage. En variante, un dispositif de filtration est également prévu en sortie des rouleaux.

La demanderesse a constaté qu'une température de la paroi 16 des rouleaux 14 avantageusement voisine d'un optimum de 85°C, permet d'assécher la terre collée sur les rouleaux 14, au moins sur une épaisseur de quelques millimètres, en général entre 1 mm et 30 mm. On créé ainsi une zone de non adhérence, du fait que la terre est sèche. Cette zone de non adhérence de la terre est au niveau de la paroi 16 de chaque rouleau 14, sur toute sa surface périphérique, donc toute la face 140. Les mouvements, chocs et vibrations dus au déplacement des légumes racines sur les rouleaux 14 permettent de provoquer, par choc, le bris de la terre et sa chute entre les rouleaux, cela d'autant plus facilement que l'adhérence de la terre sur les rouleaux 14 est très faible.

Dans le mode de réalisation décrit, les nervures 15 sont pleines et donc ne reçoivent pas de fluide caloporteur. De ce fait, elles sont à une température inférieure à celle de la paroi 16 du rouleau 14. Néanmoins, cela ne permet pas à la terre de retrouver une adhérence suffisante pour rester sur le rouleau. De plus on génère ainsi un différentiel de température entre la nervure 15 et la paroi 16 du rouleau 14 qui la porte, ce qui induit un gradient thermique dans la terre collée sur le rouleau et facilite son détachement lors de la rotation des rouleaux.

En variante, les nervures sont également creuses et donc reçoivent également un organe de chauffage, soit identique à celui du rouleau 14, donc ici un liquide caloporteur, soit différent, par exemple une résistance électrique ou la circulation d'air chaud. En variante, un rouleau qui est pourvu de plusieurs nervures 15 est équipé d'au moins une nervure creuse adaptée pour recevoir un moyen de chauffage tel que décrit précédemment.

Comme cela ressort de la figure 5, les extrémités 17 et 18 d'un rouleau 14 étant chacune pourvue d'un manchon d'entrainement 24, il est possible, en perçant les manchons 24 d'origine qui équipent les rouleaux 14, de modifier des rouleaux 14 d'origine pour permettre la circulation du liquide caloporteur dans leur volume intérieur. L'organe de chauffage 19 peut aisément être installé sur une machine agricole 1. En d'autres termes, l'invention peut équiper, par exemple sous forme de kit, en seconde monte une machine agricole existante.

La demanderesse a constaté que l'invention peut être mise en oeuvre quel que soit le matériau constitutif du rouleau. En d'autres termes, que le rouleau soit métallique, en polymères ou en un matériau composite, la mise en température du rouleau est similaire et assure les mêmes avantages que ceux décrits. Ainsi, l'invention peut équiper tout type de machine agricole équipée de rouleaux, y compris lorsque les rouleaux d'une même machine sont de nature différente.

Dans un autre mode de réalisation, non représenté, le moyen de chauffage du dispositif de nettoyage 6 comprend une circulation d'air chaud. L'organe de chauffage utilisé pour assurer la production d'air chaud est soit un organe de chauffage dédié et indépendant soit associé à l'organe de chauffage 19. Dans ce cas, l'organe 19 est adapté pour envoyer de l'air chaud, typiquement celui issu de son fonctionnement dans le cas d'une chaudière thermique, sur au moins un élément constitutif de l'organe de nettoyage 6, par exemple le tapis 11 et/ou les séries 7 de griffes 8 et/ou les rouleaux 14.

Dans d'autres modes de réalisation non représentés, le moyen de chauffage comprend également au moins deux organes de chauffage différents et complémentaires, à savoir une circulation de fluide caloporteur et/ou une résistance électrique et/ou la circulation d'air chaud. Ces deux organes de chauffage sont adaptés pour équiper au moins un, de préférence au moins deux éléments constitutifs, à savoir les rouleaux 14, les séries 7 de griffes 8, le tapis 11, du dispositif de nettoyage 6.

En variante, un rouleau 14 est pourvu d'une résistance électrique noyée dans la paroi du rouleau et/ou reçoit une circulation d'air chaud sur sa face externe 140.

Ces modes de réalisation peuvent être associés entre eux et concernés plusieurs éléments constitutifs du dispositif de nettoyage afin d'optimiser la mise en température de l'organe de nettoyage 6. Ainsi, on optimise le nettoyage en favorisant le détachement de la terre sur toutes les parties de l'organe de nettoyage 6 où elle est susceptible de s'accumuler.

## Revendications

1. Dispositif de nettoyage (6) de légumes racines (2) comprenant au moins deux rouleaux (14) montés rotatifs autour d'un axe (A), **caractérisé en ce qu'**au moins un des rouleaux (14) est équipé d'un moyen de chauffage de sa paroi externe (16).

2. Dispositif de nettoyage selon la revendication 1, **caractérisé en ce que** l'axe (A) de rotation des rouleaux (14) est perpendiculaire au sens de déplacement (F) des légumes racines sur les rouleaux (14).

3. Dispositif de nettoyage selon la revendication 1, **caractérisé en ce que** l'axe de rotation d'au moins certains des rouleaux est parallèle au sens de déplacement des légumes racines sur les rouleaux.

4. Dispositif de nettoyage selon l'une des revendications précédentes, **caractérisé en ce que** les axes (A) de rotation d'au moins deux rouleaux (14) voisins sont parallèles.

5. Dispositif de nettoyage selon l'une des revendications 1 à 3, **caractérisé en ce que** les axes de rotation d'au moins deux rouleaux voisins ne sont pas parallèles.

6. Dispositif de nettoyage selon la revendication 5, **caractérisé en ce que** les rouleaux voisins dont les axes de rotation ne sont pas parallèles sont coniques, avec un écartement constant entre les rouleaux, selon la longueur des rouleaux.

7. Dispositif de nettoyage selon l'une des revendications précédentes, **caractérisé en ce que** le moyen de chauffage comprend un organe de chauffage (19, 20) d'un fluide caloporteur circulant en circuit fermé dans le volume interne d'au moins un rouleau (14), entre ses extrémités (17, 18).

8. Dispositif de nettoyage selon la revendication 7, **caractérisé en ce que** tous les rouleaux (14) reçoivent un fluide caloporteur circulant dans leurs volumes intérieurs, entre les extrémités (17, 18) des rouleaux (14).

9. Dispositif de nettoyage selon la revendication 1, **caractérisé en ce que** le dispositif de nettoyage (6) comprend, outre les rouleaux (14), au moins un tapis roulant (11) et des griffes (8) rotatives (9), au moins un de ces éléments (11 ; 8) est également pourvu d'un moyen de chauffage.

10. Dispositif de nettoyage selon la revendication 9, **caractérisé en ce que** le moyen de chauffage comprend, comme organe de chauffage, au moins une résistance électrique équipant un des éléments (14 ; 11 ; 8) constitutifs du dispositif de nettoyage (6).

11. Dispositif de nettoyage selon la revendication 9 ou 10, **caractérisé en ce que** le moyen de chauffage comprend, comme organe de chauffage, la circulation d'air chaud sur au moins un des éléments (14 ; 11 ; 8) constitutifs du dispositif de nettoyage (6). -

12. Dispositif de nettoyage selon les revendications 9, 10 ou 11, **caractérisé en ce que** le moyen de chauffage des éléments constitutifs (14 ; 11 ; 8) du dispositif de nettoyage (6) comprend au moins deux organes de chauffage choisis parmi une circulation de fluide caloporteur, une circulation d'air chaud, une résistance électrique.

13. Dispositif de nettoyage selon l'une des revendications précédentes, **caractérisé en ce qu'**au moins un rouleau (14) est équipé sur sa face externe (140) d'au moins une nervure (15) creuse adaptée pour recevoir un organe de chauffage choisi parmi une circulation de fluide caloporteur, une résistance électrique, une circulation d'air chaud.

14. Machine agricole (1) de récolte de légumes racines (2) équipée d'un dispositif de nettoyage des légumes racines (2) conforme à une des revendications précédentes.

## Patentansprüche

1. Reinigungsvorrichtung (6) zum Reinigen von Wurtzel Gemüse (2), die mindestens zwei Walzen (14), die um eine Achse (A) drehend gelagert sind, umfasst, **dadurch gekennzeichnet, dass** mindestens eine der Walzen (14) mit einem Mittel zum Beheizen ihrer Außenwand (16) ausgestattet ist.

2. Reinigungsvorrichtung nach Anspruch 1, **dadurch gekennzeichnet, dass** die Drehachse (A) der Walzen (14) senkrecht zu der Bewegungsrichtung (F) des Wurtzel Gemüses auf den Walzen (14) verläuft.

3. Reinigungsvorrichtung nach Anspruch 1, **dadurch gekennzeichnet, dass** die Drehachse mindestens bestimmter der Walzen parallel zu der Bewegungsrichtung des Wurtzel Gemüses auf den Walzen verläuft.

4. Reinigungsvorrichtung nach einem der vorstehenden Ansprüche, **dadurch gekennzeichnet, dass** die Drehachsen (A) von mindestens zwei benachbarten Walzen (14) parallel verlaufen.

5. Reinigungsvorrichtung nach einem der Ansprüche 1 bis 3, **dadurch gekennzeichnet, dass** die Drehachsen von mindestens zwei benachbarten Walzen nicht parallel verlaufen.

6. Reinigungsvorrichtung nach Anspruch 5, **dadurch gekennzeichnet, dass** die benachbarten Walzen, deren Drehachsen nicht parallel verlaufen, mit einem konstanten Abstand zwischen den Walzen entlang der Länge der Walzen konisch sind.

7. Reinigungsvorrichtung nach einem der vorstehenden Ansprüche, **dadurch gekennzeichnet, dass** das Mittel zum Beheizen ein Element (19, 20) zum Beheizen eines Wärmeträgerfluids, das in geschlossenem Kreislauf im Innenraum mindestens einer Walze (14) zwischen ihren Enden (17, 18) zirkuliert, umfasst.

8. Reinigungsvorrichtung nach Anspruch 7, **dadurch gekennzeichnet, dass** alle Walzen (14) ein Wärmeträgerfluid aufnehmen, das in ihren Innenräumen zwischen den Enden (17, 18) der Walzen (14) zirkuliert.

9. Reinigungsvorrichtung nach Anspruch 1, **dadurch gekennzeichnet, dass** die Reinigungsvorrichtung (6) neben den Walzen (14) mindestens ein Förderband (11) und drehende (9) Krallen (8) umfasst, wobei mindestens eines dieser Teile (11; 8) ebenfalls mit einem Mittel zum Beheizen versehen ist.

10. Reinigungsvorrichtung nach Anspruch 9, **dadurch gekennzeichnet, dass** das Mittel zum Beheizen als Heizelement mindestens einen elektrischen Widerstand umfasst, der eines der Teile (14; 11; 8), aus denen die Reinigungsvorrichtung (6) besteht, startet.

11. Reinigungsvorrichtung nach Anspruch 9 oder 10, **dadurch gekennzeichnet, dass** das Mittel zum Beheizen als Heizelement die Warmluftzirkulation auf mindestens einem der Elemente (14; 11; 8), aus denen die Reinigungsvorrichtung (6) besteht, umfasst.

12. Reinigungsvorrichtung nach den Ansprüchen 9, 10 oder 11, **dadurch gekennzeichnet, dass** das Mittel zum Beheizen der Bestandteile (14; 11; 8) der Reinigungsvorrichtung (6) mindestens zwei Heizelemente umfasst, die aus einer Wärmeträgerfluidzirkulation, einer Warmluftzirkulation, einem elektrischen Widerstand ausgewählt sind.

13. Reinigungsvorrichtung nach einem der vorstehenden Ansprüche, **dadurch gekennzeichnet, dass** mindestens eine Walze (14) auf ihrer Außenseite (140) mit mindestens einer hohlen Rippe (15) ausgestattet ist, die dazu angepasst ist, ein Heizelement aufzunehmen, das aus einer Wärmeträgerfluidzirkulation, einem elektrischen Widerstand, einer Warmluftzirkulation ausgewählt ist.

14. Landwirtschaftliche Maschine (1) zum Ernten von Wurtzel Gemüse (2), die mit einer Vorrichtung zum Reinigen von Wurtzel Gemüse (2) nach einem der vorstehenden Ansprüche ausgestattet ist.

## Claims

1. Device for cleaning (6) root vegetables (2) comprising at least two rollers (14) mounted to rotate about an axis (A), **characterised in that** at least one of the rollers (14) is equipped with a means for heating its outer wall (16).

2. Cleaning device according to claim 1, **characterised in that** the axis (A) of rotation of the rollers (14) is perpendicular to the direction of movement (F) of the root vegetables on the rollers (14).

3. Cleaning device according to claim 1, **characterised in that** the axis of rotation of at least some of the rollers is parallel to the direction of movement of the root vegetables on the rollers.

4. Cleaning device according to one of the preceding claims, **characterised in that** the axes (A) of rotation of at least two adjacent rollers (14) are parallel.

5. Cleaning device according to one of Claims 1 to 3, **characterised in that** the axes of rotation of at least two adjacent rollers are not parallel.

6. Cleaning device according to claim 5, **characterised in that** the adjacent rollers whose axes of rotation are not parallel are conical, with constant spacing between the rollers, depending on the length of the rollers.

7. Cleaning device according to one of the preceding claims, **characterised in that** the heating means comprises a heating member (19, 20) for heating a heat-transfer fluid circulating in a closed circuit in the internal space of at least one roller (14), between its ends (17, 18).

8. Cleaning device according to claim 7, **characterised in that** all the rollers (14) receive a heat-transfer fluid circulating in their internal spaces, between the ends (17, 18) of the rollers (14).

9. Cleaning device according to claim 1, **characterised in that** the cleaning device (6) comprises, besides the rollers (14), at least one conveyor belt (11) and rotating (9) claws (8); at least one of these elements (11; 8) is also provided with a heating means.

10. Cleaning device according to claim 9, **characterised in that** the heating means comprises, as a heating member, at least one electrical resistance fitted to one of the elements (14; 11; 8) that constitute the cleaning device (6).

11. Cleaning device according to claim 9 or 10, **characterised in that** the heating means comprises, as a heating member, the circulation of hot air over at least one of the elements (14; 11; 8) that constitute the cleaning device (6).

12. Cleaning device according to claims 9, 10 or 11, **characterised in that** the means for heating the elements (14; 11; 8) that constitute the cleaning device (6) comprises at least two heating members chosen from a circulation of heat-transfer fluid, a circulation of hot air, an electrical resistance.

13. Cleaning device according to one of the preceding claims, **characterised in that** at least one roller (14) is equipped on its outer face (140) with at least one hollow rib (15) suitable for receiving a heating member chosen from a circulation of heat-transfer fluid, a circulation of hot air, an electrical resistance.

14. Agricultural machine (1) for harvesting root vegetables (2) equipped with a device for cleaning the root vegetables (2) according to one of the preceding claims.
